# EUROPÄISCHE PATENTSCHRIFT

(11) **EP 1 851 083 B1**
(45) Veröffentlichungstag und Bekanntmachung des Hinweises auf die Patenterteilung: **04.04.2012**
(21) Anmeldenummer: 06707131.6
(22) Anmeldetag: 21.02.2006
(51) Int. Cl.: B60L 9/00, B61C 3/00

(54) **HOCHSPANNUNGSANLAGE FÜR EIN FAHRZEUG**
HIGH-VOLTAGE SYSTEM FOR A VEHICLE
DISPOSITIF HAUTE TENSION DESTINE A UN VEHICULE

(30) Priorität: 22.02.2005 DE 102005008212
(43) Veröffentlichungstag der Anmeldung: 07.11.2007
(73) Patentinhaber: Bombardier Transportation GmbH, 10785 Berlin (DE)
(72) Erfinder: MAASS, Jörg-Torsten, 16761 Hennigsdorf (DE)
(74) Vertreter: Cohausz & Florack
(86) Internationale Anmeldenummer: PCT/EP2006/001556
(87) Internationale Veröffentlichungsnummer: WO 2006/089713

(56) Entgegenhaltungen:
- EP-A- 0 383 302
- FR-A- 2 325 532
- GB-A- 874 730
- US-A- 4 510 352

## Beschreibung

Die vorliegende Erfindung betrifft eine Anordnung mit einer Mehrzahl von aktiven Hochspannungskomponenten zum Verteilen von Hochspannung auf einem Fahrzeug, insbesondere einem Schienenfahrzeug.

Eine Reihe von Fahrzeugen, meist Schienenfahrzeuge, wird aus einer Oberleitung über Stromabnehmer mit elektrischer Energie versorgt. In Europa kommen hierfür verschiedene Spannungssysteme zur Anwendung, die mit einer Nennbetriebsspannung von 25 kV, 15 kV, 3000 V oder 1500 V arbeiten. Oberleitungsgespeiste Schienenfahrzeuge umfassen auf dem Dach neben dem Stromabnehmer in der Regel eine Reihe von separaten elektrischen aktiven Hochspannungskomponenten, welche durch eines oder mehrere der genannten Spannungssysteme gespeist werden können. Üblicherweise sind mehrere Schaltelemente, Fühlsysteme für Spannung und Strom sowie Schutzelemente gegen Überspannung vorgesehen. Jede der aktiven Hochspannungskomponenten benötigt eine äußere Isolation zwischen dem Hochspannungspotential und der Fahrzeugerde; die Schaltelemente benötigen darüber hinaus auch eine Isolation der Schaltstrecke.

Diese Isolation wird bei den gegenwärtig verwendeten aktiven Hochspannungskomponenten in der Regel durch eine Kombination aus Feststoffisolierung und Luft erreicht. Entsprechend der Anforderungen im Außenbereich sind die geforderten Isoliereigenschaften nur durch große Luft- und Kriechstrecken zu realisieren, weswegen die aktiven Hochspannungskomponenten in der Regel eine große Masse und ein großes Bauvolumen aufweisen. Insbesondere muss um jede Komponente ein spannungsfreier Raum vorgehalten werden, der eine kompakte Anordnung der Hochspannungskomponenten verhindert.

Die Anordnung von aktiven Hochspannungskomponenten auf dem Fahrzeugdach führt zu zahlreichen weiteren Nachteilen. So stellen die aktiven Hochspannungskomponenten wie erwähnt eine erhebliche Masse dar, wobei sie ein erhebliches Bauvolumen in Anspruch nehmen. Dies ist insbesondere bei Mehrsystem-Schienenfahrzeugen wegen der großen Anzahl von Komponenten störend. Die einzelnen aktiven Hochspannungskomponenten müssen durch passive Verbindungselemente, wie beispielsweise isolierte Stromschienen oder Kabel, miteinander verbunden werden, was zu zusätzlichem Aufwand und zusätzlicher Masse führt. Diese Massen sind beim konstruktiven Entwurf des Fahrzeugdaches zu berücksichtigen, wodurch sich der Aufwand hierfür erhöht. Weiterhin erhöhen die Komponenten der Hochspannungsausrüstung den Windwiderstand, was insbesondere für Hochgeschwindigkeitszüge störend ist. Der vorzuhaltende spannungsfreie Raum um jede aktive Hochspannungskomponente vergrößert den Platzbedarf der Hochspannungsanlage auf dem Fahrzeugdach und schränkt die Freizügigkeit in der Dachgestaltung erheblich ein.

Durch die Verwendung von Luft als Isoliermedium erfolgt eine Verschmutzung der isolierenden Kriechstrecken der aktiven Hochspannungskomponenten. Diese müssen regelmäßig gereinigt werden, was durch die schwierige Erreichbarkeit auf dem Dach mit hohem Aufwand verbunden ist. Die Montage aller aktiven Hochspannungskomponenten sowie deren Verbindung kann zudem erst erfolgen, wenn die Dachelemente montiert sind. Dies widerspricht dem Ziel der Verwendung eines hohen Anteils bereits vormontierter und vorgeprüfter Systeme.

Auch Schienenfahrzeuge, bei denen der Hauptteil der Hochspannungsausrüstung innerhalb des Fahrzeuges angeordnet ist, verwenden bisher Luft als Isoliermedium zwischen den aktiven Hochspannungskomponenten und benötigen darum für die Hochspannungsausrüstung viel Platz im Maschinenraum.

Aus der EP 0 596 790 B1 ist eine Hochspannungseinheit für elektrische Eisenbahn-Triebwagen bekannt, bei der ein Teil der Geräte in einer Baueinheit zusammengefasst werden. Die Baueinheit ist in einem dichten Gehäuse untergebracht, welches mit einem dielektrischen Gas gefüllt ist, sodass der um die aktiven Hochspannungskomponenten vorzuhaltende spannungsfreie Raum kleiner ausfällt. Nachteil dieser Gestaltung ist, dass alle Klemmen, Durchlässe und Zuführungen gasdicht ausgeführt werden müssen. Weiterhin ist zum Überwachen der Dichtigkeit eine entsprechende Sensorik erforderlich. Eine Verwendung von klassischen Schaltelementen, wie sie insbesondere in Gleichspannungs-Bahnnetzen verwendet werden (1500 V und 3000 V DC), führt zudem zur Alterung des Isoliergases, sodass eine Infrastruktur zur Versorgung und Entsorgung des dielektrischen Gases geschaffen werden muss.

Aus der DE 3536843 C2 ist weiterhin ein Stromabnehmer bekannt, bei dem die Isolatoren innerhalb der Schere angeordnet sind und der Grundrahmen des Stromabnehmers ohne weitere Isolierung direkt auf dem Dach montiert wird. Mit dieser Gestaltung wird zwar eine Verringerung der Bauhöhe des Stromabnehmers bei gleichzeitiger Anhebung der Dachhöhe und somit der Gewinnung von Raum innerhalb des Fahrzeuges erzielt. Gleichzeitig wird der Windwiderstand und die Geräuschentwicklung des Stromabnehmers verringert, was insbesondere im Hochgeschwindigkeitsverkehr von Vorteil ist. Nachteil auch dieser Gestaltung ist, dass alle weiteren unter Hochspannung stehenden und auf dem Dach angeordneten aktiven Komponenten wie Überspannungsableiter, Fahrzeug-Hauptschalter, Mess- und Fühlsysteme usw. aus oben genannten Gründen weiterhin einen vergleichsweise großen Bauraum beanspruchen. Das Fahrzeugdach kann daher nicht weiter angehoben werden, sodass trotz der durch den Stromabnehmer erzielten Vorteile insgesamt nur eine vergleichsweise geringe Verbesserung der Bauraumsituation erzielt werden kann.

FR2325532 offenbart eine Anordnung mit einer Mehrzahl von aktiven Hochspannungskomponenten zum verteilen von Hochspannung auf einem Schienenfahrzeug, bei der die äussere elektrische Isolation der aktiven Hochspannungskomponente im Wesentlichen vollständig durch eine dielektrische Flüssigkeit übernommen wird.

Der vorliegenden Erfindung liegt daher die Aufgabe zu Grunde, eine Anordnung der eingangs genannten Art zur Verfügung zu stellen, welche die oben genannten Nachteile nicht oder zumindest in geringerem Maße aufweist und insbesondere eine verringerte Masse und verringerte Bauraumerfordernisse der aktiven Hochspannungskomponenten ermöglicht.

Die vorliegende Erfindung löst diese Aufgabe ausgehend von einer Anordnung gemäß dem Oberbegriff des Anspruchs 1 durch die im kennzeichnenden Teil des Anspruchs 1 angegebenen Merkmale.

Der vorliegenden Erfindung liegt die technische Lehre zu Grunde, dass man eine Anordnung mit deutlich reduziertem Bauraum und deutlich reduzierter Masse erzielen kann, wenn die äußere elektrische Isolation wenigstens einer ersten aktiven Hochspannungskomponente im Wesentlichen vollständig durch eine erste Feststoffisolierung und/ oder ein flüssiges Isolationsmedium realisiert ist.

Die im Wesentlichen vollständige, vorzugsweise absolut lückenlose, Isolierung wenigstens der ersten aktiven Hochspannungskomponente durch feste und/oder flüssige Isolierstoffe ermöglicht es zum einen, die Baugröße der jeweiligen aktiven Hochspannungskomponente selbst zu verringern, also eine erhebliche Ersparnis and Masse und Volumen für die jeweilige aktive Hochspannungskomponente zu erzielen. Zudem verringert sich der spannungsfrei zu haltende Raum um die jeweilige aktive Hochspannungskomponente herum, sodass die aktiven Hochspannungskomponenten in deutlich geringerem Abstand zueinander angeordnet werden können. Hierdurch reduziert sich der Bauraum für die gesamte Anordnung weiter. Zudem verkürzen sich die passiven Verbindungen zwischen den aktiven Hochspannungskomponenten entsprechend, wodurch auch in diesem Bereich eine entsprechende Gewichtseinsparung erzielt werden kann.

Ein weiterer Vorteil der erfindungsgemäßen im Wesentlichen vollständigen Isolierung der ersten aktiven Hochspannungskomponente durch feste und/oder flüssige Isolierstoffe liegt darin, dass diese hierdurch vor Verschmutzungen geschützt ist und daher deutlich weniger Reinigungs- bzw. Wartungsaufwand erforderlich ist.

Bevorzugt ist die erste aktive Hochspannungskomponente zur Herstellung der äußeren elektrische Isolation von der Umgebung im Wesentlichen vollständig, vorzugsweise absolut lückenlos, durch die erste Feststoffisolierung und/oder das flüssige Isolationsmedium abgekapselt. Hierdurch lässt sich die durch die Feststoffisolierung und/oder das flüssige Isolationsmedium erzielbare Gewichts- und Bauraumreduktion der aktiven Hochspannungskomponenten und der gesamten Anordnung maximieren. Mit anderen Worten ist die erste aktive Hochspannungskomponente bevorzugt durch eine erste Feststoffisolierung und/oder das flüssige Isolationsmedium derart gekapselt, dass lediglich die entsprechenden Anschlusselemente der Hochspannungskomponente gegebenenfalls entsprechenden Kontakt zur Umgebung haben können. Im Betrieb ist dieser potentielle Kontakt zur Umgebung dann aber ebenfalls durch eine entsprechende Feststoffisolation unterbunden.

Es versteht sich hierbei, dass im Inneren einer durch eine Feststoffisolierung erzielten Kapselung durchaus eine innere Isolation durch Luft oder andere gasförmige Isolationsmedien vorgesehen sein kann, das zwischen der aktiven Hochspannungskomponente und der Feststoffisolierung angeordnet ist.

Vorzugsweise ist die äußere elektrische Isolation der ersten aktiven Hochspannungskomponente aber im Wesentlichen unter Ausschluss von gasförmigen Medien als Isolationsmedium, insbesondere unter Ausschluss von Luft als Isolationsmedium, realisiert. Hierdurch reduziert sich insbesondere der spannungsfrei zu haltende Raum erheblich. Der Isolator (Feststoff und/oder flüssiges Isolationsmedium) umschließt und kontaktiert die ersten aktive Hochspannungskomponente dann bevorzugt unmittelbar.

Vorzugsweise sind mehrere aktive Hochspannungskomponenten, insbesondere alle aktiven Hochspannungskomponenten, der Anordnung mit einer entsprechend vollständigen Isolierung aus einer Feststoffisolierung und/oder einem flüssigen Isolationsmedium versehen. So ist bevorzugt vorgesehen, dass die äußere elektrische Isolation wenigstens einer mit der ersten aktiven Hochspannungskomponente elektrisch verbundenen zweiten aktiven Hochspannungskomponente im Wesentlichen vollständig, vorzugsweise absolut lückenlos, durch eine Feststoffisolierung und/oder ein flüssiges Isolationsmedium realisiert ist.

Weiterhin ist dementsprechend auch wenigstens eine der passiven Verbindungen zwischen den aktiven Hochspannungskomponenten mit einer entsprechend weit gehenden Feststoffisolierung versehen. So ist bevorzugt die erste aktive Hochspannungskomponente mit der zweiten aktiven Hochspannungskomponente über ein passives Verbindungselement verbunden, dessen äußere elektrische Isolation im Wesentlichen vollständig durch eine Feststoffisolierung realisiert ist.

Bevorzugt ist vorgesehen, dass die erste aktive Hochspannungskomponente eine integrierte erste elektrische Schnittstelleneinrichtung aufweist und die zweite aktive Hochspannungskomponente eine integrierte zweite elektrische Schnittstelleneinrichtung aufweist. Die elektrische Verbindung zwischen der ersten aktiven Hochspannungskomponente und der zweiten aktiven Hochspannungskomponente ist hierbei dann durch unmittelbare Kopplung der ersten elektrischen Schnittstelleneinrichtung mit der zweiten elektrischen Schnittstelleneinrichtung realisiert. Hiermit ergibt sich eine besonders einfach zu fertigende und zu montierende Anordnung.

Vorzugsweise ist die äußere elektrische Isolation der ersten elektrischen Schnittstelleneinrichtung im Wesentlichen vollständig durch die Feststoffisolierung der ersten aktiven Hochspannungskomponente realisiert. Zusätzlich oder alternativ ist die äußere elektrische Isolation der zweiten elektrischen Schnittstelleneinrichtung im Wesentlichen vollständig durch die Feststoffisolierung der zweiten aktiven Hochspannungskomponente realisiert. Durch diese Integration der jeweiligen Schnittstellen in die Feststoffisolierung der jeweiligen Feststoffisolierung kann eine weitere Verringerung des Bauraums erzielt werden.

Die Schnittstelleneinrichtungen können in beliebiger geeigneter Weise gestaltet sein, beispielsweise als Schraubverbindung oder dergleichen. Eine besonders einfache, schnell zu montierende Anordnung ergibt sich jedoch bei bevorzugten Varianten der Erfindung, bei denen die erste elektrische Schnittstelleneinrichtung und die zweite elektrische Schnittstelleneinrichtung nach Art einer Steckverbindung ausgebildet sind.

Die betreffenden aktiven Hochspannungskomponenten können jeweils mit einer gesonderten äußeren elektrische Isolation durch eine Feststoffisolierung und/oder ein flüssiges Isolationsmedium versehen sein. Hierdurch ergibt sich insbesondere bei modular aufgebauten Anordnungen eine besonders einfache Herstellung und Wartung, da einzelne Komponenten problemlos montiert bzw. ausgetauscht werden können. Bei anderen vorteilhaften Varianten der Erfindung ist jedoch die äußere elektrische Isolation von wenigstens zwei aktiven Hochspannungskomponenten im Wesentlichen vollständig durch eine gemeinsame Isolierung mittels einer Feststoffisolierung und/oder eines flüssigen Isolationsmediums realisiert. Hierdurch lassen sich besonders kompakte vorgefertigte und vorgeprüfte Baugruppen erzielen.

Die aktiven Hochspannungskomponenten mit gemeinsamer Isolierung müssen nicht zwingend elektrisch mit einander verbunden sein. Bei besonders vorteilhaften, weil in besonders kompakter Weise realisierbaren Varianten der erfindungsgemäßen Anordnung ist vorgesehen, dass die beiden aktiven Hochspannungskomponenten durch eine elektrische Verbindung miteinander verbunden sind, wobei die äußere elektrische Isolation der elektrischen Verbindung dann bevorzugt im Wesentlichen vollständig durch die gemeinsame Isolierung (Feststoff und/oder flüssiges Isolationsmedium) der beiden aktiven Hochspannungskomponenten realisiert ist.

Bei besonders vorteilhaften Varianten der erfindungsgemäßen Anordnung ist eine Trägereinrichtung zur gemeinsamen Aufnahme wenigstens eines Teils der aktiven Hochspannungskomponenten vorgesehen. Hierdurch lassen sich besonders kompakte vorgefertigte und vorgeprüfte Baugruppen erzielen, welche die Montage und Wartung der gesamten Hochspannungsanlage deutlich vereinfachen. Bei der Trägereinrichtung kann es sich um eine beliebig gestaltete, aus einer oder mehreren Komponenten aufgebaute Einheit handeln. So kann es sich beispielsweise um eine einfache Montageplatte oder dergleichen handeln. Bei bevorzugten Varianten der erfindungsgemäßen Anordnung handelt es sich bei der Trägereinrichtung um einen Container. Dieser schützt die von ihm gehaltenen aktiven Hochspannungskomponenten zum einen zusätzlich vor Umgebungseinflüssen. Zudem kann er, beispielsweise bei einer Anordnung auf dem Fahrzeugdach, unter Strömungsgesichtspunkten optimiert gestaltet sein.

Bei den aktiven Hochspannungskomponenten kann es sich grundsätzlich um beliebige aktive Hochspannungskomponenten für ein Fahrzeug handeln. Bei solchen aktiven Hochspannungskomponenten kann es sich beispielsweise um beliebige Hochspannungskomponenten handeln, welche eines oder mehrere Signale generieren, eine oder mehrere Stellbewegungen oder dergleichen ausführen, eine Energieumwandlung vornehmen etc. Vorzugsweise umfasst die erfindungsgemäße Anordnung einen Fühler zur Erkennung des Spannungssystems und/oder ein Schutzelement vor Überspannungen im Gleich- und Wechselspannungssystem und/oder ein Leistungsschaltelement für ein Wechselspannungssystem und/oder ein Leistungsschaltelement für ein Gleichspannungssystem und/oder ein Schutzelement vor transienten Spannungsspitzen und/oder ein Schaltelement für Trennschaltungen und/oder einen Fühler zur Strommessung in einem Gleich- und Wechselspannungssystem als entsprechend mit einer Isolierung (Feststoff und/oder flüssiges Isolationsmedium) versehene aktive Hochspannungskomponente. Es versteht sich, dass von den oben genannten aktiven Hochspannungskomponenten eines Typs, insbesondere für den Mehrsystembetrieb, jeweils mehrere solche Komponenten vorgesehen sein können.

Bei bevorzugten Varianten der erfindungsgemäßen Anordnung mit zumindest teilweiser Isolierung durch ein flüssiges Isolationsmedium ist ein Gehäuse vorgesehen, in dem wenigstens die erste aktive Hochspannungskomponente angeordnet ist. Das flüssige Isolationsmedium ist dann derart in dem Gehäuse aufgenommen, dass wenigstens die erste aktive Hochspannungskomponente zumindest teilweise von dem flüssigen Isolationsmedium umspült ist, um in diesem Umspülungsbereich die Isolationswirkung zu erzielen. Vorzugsweise wird das flüssige Isolationsmedium erste in das Gehäuse eingefüllt, wenn alle Komponenten im Gehäuse fertig montiert sind. Anschließend wird das Gehäuse dicht verschlossen.

Das flüssige Isolationsmedium hat zum einen den Vorteil, dass es auch zu einem späteren Zeitpunkt, z. B. zu Wartungs- oder Reparaturzwecken, einen einfachen nachträglichen Zugriff auf die Komponenten im Gehäuse ermöglicht. Zudem ist das flüssige Isolationsmedium in der Regel unempfindlich gegen Teilentladungen.

Weiterhin zeichnet sich das flüssige Isolationsmedium durch eine gegenüber gasförmigen Medien verbesserte Wärmeabfuhr aus, sodass sich die Kühlung der installierten Komponenten einfacher realisieren lässt. Gegebenenfalls kann das flüssige Isolationsmedium das Kühlmedium eines Kühlkreislaufs bilden. Schließlich können auch herkömmliche Komponenten mit im Betrieb bewegten Bauteilen, beispielsweise Schaltelemente oder dergleichen, problemlos in dem flüssigen Isolationsmedium eingesetzt werden.

Es kann weiterhin vorgesehen sein, dass die Isolation teilweise auch über eine Feststoffisolierung erfolgt, also beispielsweise ein Teil der ersten aktiven Hochspannungskomponente von einer Feststoffisolierung kontaktiert wird, während zumindest ein weiterer Teil der ersten aktiven Hochspannungskomponente über das ihn umspülende und damit kontaktierende flüssige Isolationsmedium von der Umgebung isoliert wird.

Das Gehäuse selbst kann zumindest teilweise aus einem elektrisch isolierenden Feststoff bestehen. Bei besonders einfach herzustellenden Varianten ist das Gehäuse aber zumindest teilweise nicht aus einem elektrisch isolierenden Feststoff gebildet. So kann ees beispielsweise ganz oder teilweise aus Metall bestehen, wodurch sich seine Herstellung vereinfacht und seine Lebensdauer erhöht. Die äußere elektrische Isolierung der ersten aktiven Hochspannungskomponente erfolgt dann beispielsweise Im wesentlichen vollständig über das flüssige Isolationsmedium.

Bei besonders einfach zu realisierenden Varianten der erfindungsgemäßen Anordnung ist wenigstens die erste aktive Hochspannungskomponente im Wesentlichen vollständig von dem flüssigen Isolationsmedium umspült und damit direkt kontaktiert. Es ist dann kein besonderer Aufwand für eine Feststoffisolierung zu betreiben. Lediglich die Halterungen der ersten aktiven Hochspannungskomponente müssen dann zumindest in geeigneten Bereichen entsprechend isoliert oder isolierend ausgebildet sein. Dies lässt sich jedoch vergleichsweise einfach realisieren.

Als flüssiges Isolationsmedium können grundsätzlich beliebige geeignete Medien verwendet werden, mit denen unter den realen Betriebsbedingungen des Fahrzeugs eine höhere - vorzugsweise eine deutlich höhere - elektrische Durchschlagfestigkeit zu realisieren ist als dies mit Luft als Isolationsmedium unter den realen Betriebsbedingungen eines solchen Fahrzeugs zu erwarten ist. Vorzugsweise wird als flüssiges Isolationsmedium ein Medium verwendet, das im Betrieb, d. h. unter realen Betriebsbedingungen des Fahrzeugs, eine elektrische Durchschlagfestigkeit aufweist, die wenigstens dem 10-fachen, vorzugsweise wenigstens dem 20-fachen, der elektrischen Durchschlagfestigkeit von Luft - unter den entsprechenden realen Betriebsbedingungen des Fahrzeugs - entspricht. Hierdurch lassen sich bei den eingangs genannten Betriebsbedingungen für Schienenfahrzeuge zum Beispiel Isolationsstrecken unterhalb von 10 cm, insbesondere im Bereich von wenigen Zentimetern, realisieren. Dies ermöglich in vorteilhafter Weise die Realisierung sehr kompakter Anordnungen.

Bei vorteilhaften Varianten der erfindungsgemäßen Anordnung wird als flüssiges Isolationsmedium ein Mineralöl, eine Silikonflüssigkeit oder eine Esterflüssigkeit verwendet. Diese zeichnen sich nicht zuletzt hinsichtlich der erforderlichen Abdichtung des Gehäuses durch ihre besonders einfache Handhabung und durch ihre ausreichende Stabilität, insbesondere ihre ausreichende Alterungsstabilität im Betrieb, aus.

Die vorliegende Erfindung betrifft weiterhin ein Fahrzeug, insbesondere ein Schienenfahrzeug, mit wenigstens einem Stromabnehmer und einer damit elektrisch verbundenen erfindungsgemäßen Anordnung mit mehreren aktiven Hochspannungskomponenten.

Bei einem solchen Fahrzeug kann die Hochspannungsanlage sowohl ganz oder teilweise auf dem Fahrzeugdach als auch ganz oder teilweise im Fahrzeuginneren, beispielsweise in einem Maschinenraum oder einem Unterflurbereich des Fahrzeugs, angeordnet sein. Vorzugsweise sind daher mehrere, insbesondere sämtliche, über den Stromabnehmer gespeisten Hochspannungskomponenten des Fahrzeugs auf dem Fahrzeugdach angeordnet, wobei sie insbesondere durch eine gemeinsame Trägereinrichtung gehalten sind. Die Trägereinrichtung ist dabei bevorzugt als aerodynamisch geformter Dachcontainer ausgebildet. Bei weiteren Varianten des erfindungsgemäßen Fahrzeugs sind mehrere, insbesondere sämtliche, über den Stromabnehmer gespeisten aktiven Hochspannungskomponenten des Fahrzeugs in einem Unterflurbereich angeordnet, wobei sie insbesondere ebenfalls durch eine gemeinsame Trägereinrichtung gehalten sind.

Bevorzugt ist die Trägereinrichtung mit den von ihr aufgenommenen aktiven Hochspannungskomponenten wie erwähnt als separat montierbare, vorgefertigte, insbesondere vorgeprüfte, Baugruppe ausgebildet. Hierdurch verringern sich die Fertigungs- bzw. Montagezeiten des Fahrzeugs in diesem Bereich erheblich.

Die elektrischen Komponenten, die durch die Trägereinrichtung aufgenommen sind, sich also beispielsweise im Inneren eines Containers befinden, können alle üblicherweise auf dem Fahrzeugdach montierten Anlagen oder ein Teil davon umfassen, soweit sie ohne besondere Probleme durch die Trägereinrichtung aufgenommen, also beispielsweise im Container untergebracht werden können.

Bei vorteilhaften Varianten des erfindungsgemäßen Fahrzeugs ist der Stromabnehmer mit isolierter Unterschwinge ausgeführt. Damit entfällt die Notwendigkeit, den Stromabnehmer selbst auf ein isoliertes Gerüst zu montieren. Dies ist besonders im Zusammenhang mit der Anordnung der durch die Trägereinrichtung aufgenommen aktiven Hochspannungskomponenten in einem Unterflurbereich von Vorteil, da hiermit eine bedeutende Einsparung an Bauhöhe zu erreichen ist. Der gesamte Dachbereich kann dann angehoben werden, was besonders vorteilhaft für die Unterdachanordnung von Systemen wie Klimaanlagen etc. ist und sich ebenfalls sehr vorteilhaft bei der konstruktiven Gestaltung von doppelstöckigen Triebzügen nutzen lässt. Besonders im Bereich des Hochgeschwindigkeitsverkehrs lassen sich hiermit aerodynamische und aeroakustische Anforderungen an die Dachgestaltung optimal berücksichtigen. Bevorzugt weist der Stromabnehmer dann noch eine integrierte Hochspannungskupplung auf, wodurch sich ein besonders einfacher Anschluss der nachgeschalteten aktiven Hochspannungskomponenten ergibt.

Weitere bevorzugte Ausgestaltungen der Erfindung ergeben sich aus den Unteransprüchen bzw. der nachstehenden Beschreibung bevorzugter Ausführungsbeispiele, welche auf die beigefügten Zeichnungen Bezug nimmt. Es zeigen:
- Figur 1: einen schematischen Schnitt durch eine bevorzugte Ausführungsform des erfindungsgemäßen Fahrzeugs mit einer bevorzugten Ausführungsform der erfindungsgemäßen Anordnung zum Verteilen von Hochspannung auf dem Fahrzeug;
- Figur 2: einen schematischen Schnitt durch eine weitere bevorzugte Ausführungsform des erfindungsgemäßen Fahrzeugs mit einer weiteren bevorzugten Ausführungsform der erfindungsgemäßen Anordnung zum Verteilen von Hochspannung auf dem Fahrzeug;
- Figur 3: einen schematischen Schnitt durch eine weitere bevorzugte Ausführungsform des erfindungsgemäßen Fahrzeugs mit einer weiteren bevorzugten Ausführungsform der erfindungsgemäßen Anordnung zum Verteilen von Hochspannung auf dem Fahrzeug.

### Erstes Ausführungsbeispiel

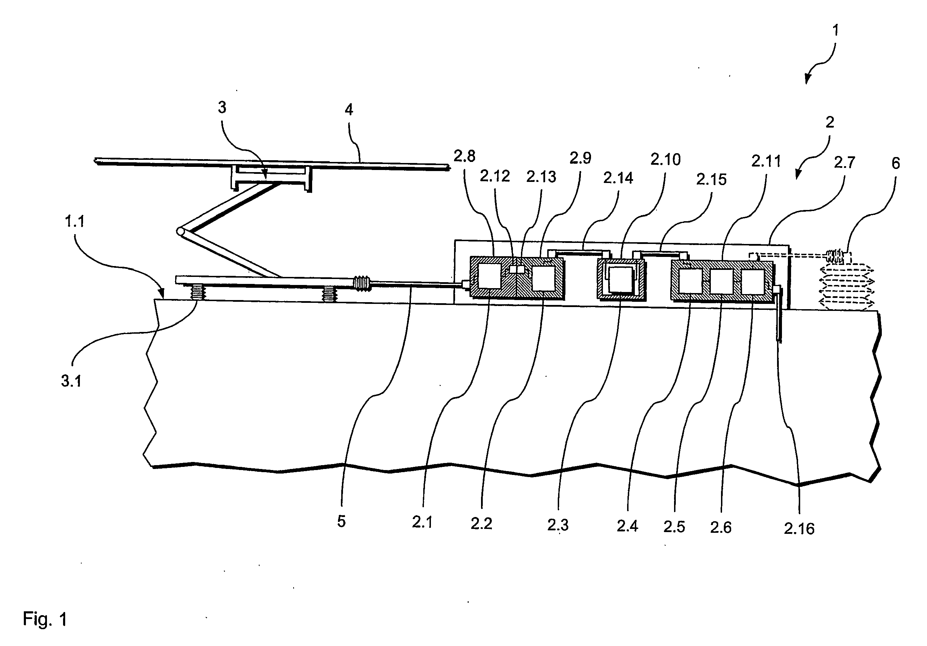

Figur 1 zeigt einen schematischen Schnitt durch eine bevorzugte Ausführungsform des erfindungsgemäßen Fahrzeugs in Form eines schienengebundenen Triebwagens 1 mit einer bevorzugten Ausführungsform der erfindungsgemäßen Anordnung 2 zum Verteilen von Hochspannung auf dem Triebwagen 1.

Der Triebwagen 1 wird über einen Stromabnehmer in Form eines Pantographen 3 aus einer Oberleitung 4 mit Hochspannung versorgt. Der über Isolatoren 3.1 auf dem Dach 1.1 des Triebwagens 1 befestigte Pantograph 3 ist über eine entsprechend feststoffisolierte Zuleitung 5 elektrisch mit der Anordnung 2 verbunden.

Die Anordnung 2 umfasst mehrere aktive Hochspannungskomponenten 2.1 bis 2.6, die in einem gemeinsamen Dachcontainer 2.7 montiert sind. Der Dachcontainer 2.7 stellt mit anderen Worten eine Trägereinrichtung dar, welche die aktiven Hochspannungskomponenten 2.1 bis 2.6 der Anordnung 2 aufnimmt. Der Dachcontainer 2.7 kann insbesondere bei Hochgeschwindigkeitszügen entsprechend strömungsgünstig geformt sein.

Die elektrische Isolation der Hochspannungskomponenten 2.1 bis 2.6 ist jeweils vollständig durch eine Feststoffisolierung 2.8 bis 2.11 realisiert. Hierzu sind die aktiven Hochspannungskomponenten 2.1 bis 2.6 jeweils durch eine zugehörige Feststoffisolierung 2.8 bis 2.11 derart elektrisch gegenüber ihrer Umgebung gekapselt, dass höchstenfalls ihre elektrischen Anschlüsse Kontaktpunkte zur Umgebung bieten könnten.

So ist die elektrische Isolation der aktiven Hochspannungskomponenten 2.1, 2.2 und 2.4 bis 2.6 jeweils vollständig, d.h. unter Ausschluss von gasförmigen Isolationsmedien, wie Luft oder dergleichen, durch eine Feststoffisolierung 2.8, 2.9 bzw. 2.11 gebildet, welche die zugehörigen Hochspannungskomponenten 2.1, 2.2, 2.4, 2.5 bzw. 2.6 vollständig umschließt, wobei sie an der jeweiligen aktiven Hochspannungskomponente 2.1, 2.2, 2.4, 2.5 bzw. 2.6 kontaktierend anliegt. Die Hochspannungskomponenten 2.1, 2.2, 2.4, 2.5 bzw. 2.6 können hierzu beispielsweise in dem festen Isolationsmaterial eingegossen sein oder mit diesem umspritzt sein etc.

Wie der Figur 1 insbesondere zu entnehmen ist, sind die aktiven Hochspannungskomponenten 2.4, 2.5 und 2.6 dabei in einer gemeinsamen Feststoffisolierung 2.11 angeordnet, sodass sie eine einzige vorgefertigte Baugruppe bilden. Diese Baugruppe kann nach ihrer Fertigung vorgeprüft werden, sodass dies nicht erst bei der Montage der Anordnung 2 erfolgen muss, wodurch sich die Prüfzeiten bei der Montage reduzieren.

Die aktive Hochspannungskomponente 2.3 ist demgegenüber in einem luftgefüllten Hohlraum eines im Betrieb geschlossenen Isolationscontainers 2.10 angeordnet. Die äußere elektrische Isolation der aktiven Hochspannungskomponente 2.3 ist auch hier vollständig durch die Feststoffisolierung des Isolationscontainers 2.10 übernommen, während eine innere Isolation durch die Luft im Hohlraum des geschlossenen Isolationscontainers 2.10 erfolgt. Es versteht sich hierbei, dass gegebenenfalls auch mehrere Hochspannungskomponenten in derartigen Isofationscontainern gekapselt sein können.

Die vollständige äußere Isolierung der aktiven Hochspannungskomponenten 2.1 bis 2.6 durch feste Isolierstoffe unter Verzicht auf Luft oder andere Gase als Isoliermedium ermöglicht es, die Baugröße der aktiven Hochspannungskomponenten 2.1 bis 2.6 wegen des Wegfalls der Luft- und Kriechstrecken zu verringern. Hierdurch ergibt sich wie erwähnt eine erhebliche Volumen- und Gewichtsersparnis. Durch den Wegfall des spannungsfreien Raumes um die aktiven Hochspannungskomponenten 2.1 bis 2.6 können die aktiven Hochspannungskomponenten 2.1 bis 2.6 zudem sehr nahe aneinander angeordnet werden. Hierdurch reduziert sich zum einen der Gesamtbauraum der Anordnung 2 noch weiter und es verkürzen sich die passiven Verbindungen zwischen den aktiven Komponenten entsprechend, sodass auch hier weniger Aufwand zu betreiben ist.

Die Verbindung zwischen der ersten aktiven Hochspannungskomponente 2.1 und der zweiten aktiven Hochspannungskomponente 2.2 erfolgt über eine erste Schnittstelleneinrichtung 2.12 und eine zweite Schnittstelleneinrichtung 2.13. Die erste Schnittstelleneinrichtung 2.12 ist als in der ersten Feststoffisolierung 2.8 eingebettete erste Steckerkomponente ausgebildet, während die zweite Schnittstelleneinrichtung 2.13 als hierzu komplementäre, in der zweiten Feststoffisolierung 2.9 eingebettete zweite Steckerkomponente ausgebildet ist.

Die äußere elektrische Isolation der ersten Schnittstelleneinrichtung 2.12 und der zweiten Schnittstelleneinrichtung 2.13 ist somit durch die erste Feststoffisolierung 2.8 bzw. die zweite Feststoffisolierung 2.9 übernommen. Um die erste Hochspannungskomponente 2.1 mit der zweiten Hochspannungskomponente 2.2 zu koppeln, müssen lediglich die erste Steckerkomponente 2.12 und die zweite Steckerkomponente 2.13 ineinander gesteckt werden, wodurch sich dann ebenfalls eine vorgefertigte Baugruppe ergibt, die gegebenenfalls vorgeprüft werden kann. Eine zusätzliche mechanische Verbindung kann dabei dann gegebenenfalls über die Feststoffisolierungen 2.8 und 2.9 erfolgen. Diese Gestaltung ermöglicht es, die beiden Hochspannungskomponenten 2.1 und 2.2 sehr nahe zueinander anzuordnen, sodass sich eine besonders kompakte Baugruppe ergibt.

Es versteht sich hierbei, dass die äußere elektrische Isolation der ersten Schnittstelleneinrichtung und/oder der zweiten Schnittstelleneinrichtung gegebenenfalls auch durch eine gesonderte Feststoffisolierung realisiert sein kann. Diese schließt dann jedoch lückenlos an die jeweilige Feststoffisolierung der zugeordneten aktiven Hochspannungskomponente, um die lückenlose äußere Isolation durch Feststoffe zu gewährleisten.

Die Verbindung zwischen der zweiten aktiven Hochspannungskomponente 2.2 und der dritten Hochspannungskomponente 2.3 erfolgt über eine externe passive Verbindungsleitung 2.14. Diese Verbindungsleitung 2.14 ist ebenfalls vollständig von einer Feststoffisolierung umgeben, sodass auch ihre elektrische Isolation im Wesentlichen vollständig hierdurch erfolgt. Die Kopplung der Verbindungsleitung 2.14 erfolgt dabei über gegenüber der Umgebung durch einen Feststoff vollständig elektrisch isolierte Schraubkontakte an der Oberfläche der Feststoffisolierung 2.9 bzw. des Isolationscontainers 2.10. Hierdurch ist im Betrieb eine vollständige Kapselung der Hochspannung führenden Bauteile durch eine Feststoffisolierung sichergestellt. Es versteht sich jedoch, dass bei anderen Varianten der Erfindung auch hier wieder Steckkontakte oder andersartige Verbindungselemente vorgesehen sein können.

Die Verbindung zwischen der dritten aktiven Hochspannungskomponente 2.3 und der vierten aktiven Hochspannungskomponente 2.4 erfolgt ebenfalls über eine externe passive Verbindungsleitung 2.15. Diese Verbindungsleitung 2.15 ist ebenfalls vollständig von einer Feststoffisolierung umgeben, sodass auch ihre elektrische Isolation im Wesentlichen vollständig hierdurch erfolgt. Die Kopplung der Verbindungsleitung 2.15 erfolgt dabei über gegenüber der Umgebung durch einen Feststoff vollständig elektrisch isolierte Schraubkontakte an der Oberfläche des Isolationscontainers 2.10 bzw. der Feststoffisolierung 2.11.

Die Verbindung zwischen der vierten aktiven Hochspannungskomponente 2.4 und der fünften aktiven Hochspannungskomponente 2.5 sowie zwischen der fünften aktiven Hochspannungskomponente 2.5 und der sechsten aktiven Hochspannungskomponente 2.6 erfolgt über in der Feststoffisolierung 2.11 eingebettete und damit durch diese ebenfalls im Wesentlichen vollständig isolierte Verbindungen.

Über eine weitere externe passive Verbindungsleitung 2.16 ist die sechste Hochspannungskomponente 2.6 und damit die Anordnung 2 mit nachgeschalteten Komponenten der elektrischen Einrichtung des Triebfahrzeugs 1 verbunden, beispielsweise mit dem Haupttransformator des Triebfahrzeugs 1. Diese Verbindungsleitung 2.16 ist ebenfalls vollständig von einer Feststoffisolierung umgeben, sodass auch ihre elektrische Isolation im Wesentlichen vollständig hierdurch erfolgt. Die Kopplung der Verbindungsleitung 2.16 erfolgt dabei wiederum über gegenüber der Umgebung durch einen Feststoff vollständig elektrisch isolierte Schraubkontakte an der Oberfläche der Feststoffisolierung 2.11.

Bei den nachgeschalteten Komponenten der elektrischen Einrichtung des Triebfahrzeugs 1 kann es sich wiederum um aktive Hochspannungskomponenten handeln. Vorzugsweise umfasst die Anordnung 2 sämtliche aktiven Hochspannungskomponenten des Triebfahrzeugs 1, die dem Stromabnehmer nachgeschaltet und einer nachfolgenden Wandlereinrichtung, beispielsweise einem Transformator wie dem Haupttransformator, vorgeschaltet sind.

Der Dachcontainer 2.7 kann mit den darin montierten aktiven Hochspannungskomponenten 2.1 bis 2.6 als eine einzige Baugruppe vormontiert und vorgeprüft werden. Die Montage-und Prüfzeiten der aktiven Hochspannungskomponenten am Triebfahrzeug verkürzen sich dadurch erheblich. Mit anderen Worten ist die Montage eines komplett vorgefertigten und geprüften Hochspannungscontainers möglich.

Durch den Wegfall einer Vielzahl von Schnittstellen, Kupplungen etc. der bislang separat montierten aktiven Hochspannungskomponenten lässt sich auf diesem Weg eine kostengünstige Endmontage erreichen. Besonders im Bereich des Hochgeschwindigkeitsverkehrs lassen sich Anforderungen aus der Aerodynamik und Aeroakustik an das Containerdesign leicht berücksichtigen.

Es versteht sich hierbei, dass gegebenenfalls einzelne aktive Hochspannungskomponenten, die nicht in vollständiger Feststoffisolierung vorhanden sind, die Hochspannungsanlage in traditioneller Anordnung auf dem Dach ergänzen können, wie dies in Figur 1 durch die gestrichelte Kontur 6 angedeutet ist. Ebenso versteht es sich, dass derartige aktive Hochspannungskomponenten mit nicht vollständiger Feststoffisolierung, insbesondere aktive Hochspannungskomponenten mit nicht vollständiger Feststoffisolierung, die bei geringeren Betriebsspannungen, z: B. 3000V DC oder 1500V DC, zum Einsatz kommen, auch im Dachcontainer 2.7 angeordnet werden können.

Bei den aktiven Hochspannungskomponenten 2.1 bis 2.6 kann es sich wie erwähnt um beliebige aktive Hochspannungskomponenten handeln, die sich insbesondere gegebenenfalls auf für den Mehrsystembetrieb, also den Einsatz in Verbindung mit unterschiedlichen Spannungssystemen. Hierbei kann es sich beispielsweise um Fühler zur Erkennung des Spannungssystems, Überspannungsschutzelemente im Gleich- und Wechselspannungssystem, Leistungsschaltelemente für ein Wechselspannungssystem oder für ein Gleichspannungssystem, Schutzelemente vor transienten Spannungsspitzen, Schaltelemente für Trennschaltungen, Fühler zur Strommessung in einem Gleich- und Wechselspannungssystem etc. handeln. Vorzugsweise umfasst die Anordnung 2 sämtliche dieser aktiven Hochspannungskomponenten des Triebfahrzeugs 1.

### Zweites Ausführungsbeispiel

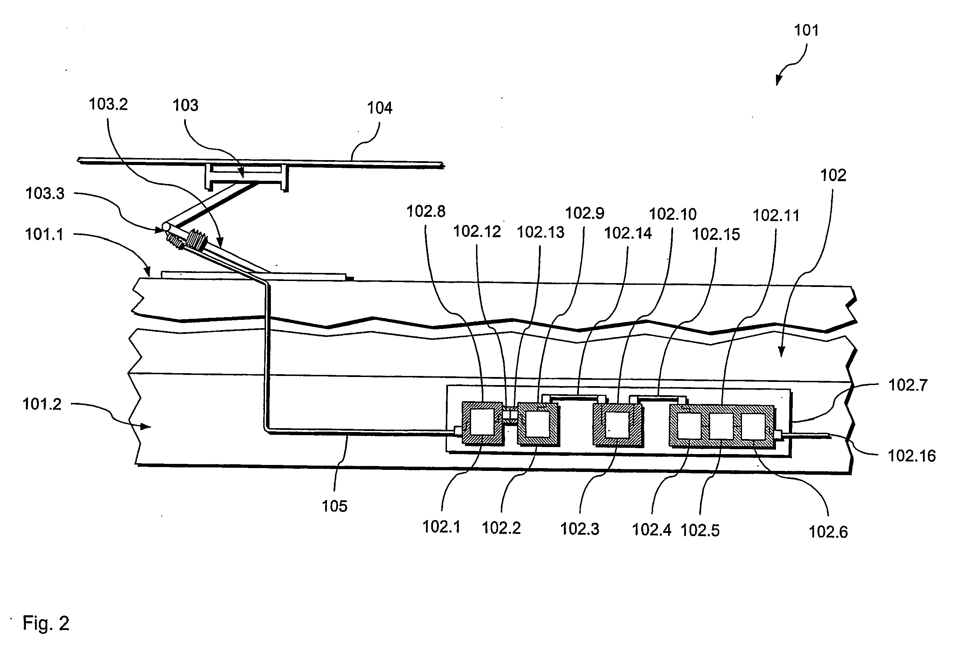

Figur 2 zeigt einen schematischen Schnitt durch eine weitere bevorzugte Ausführungsform des erfindungsgemäßen Fahrzeugs in Form eines schienengebundenen Triebwagens 101 mit einer bevorzugten Ausführungsform der erfindungsgemäßen Anordnung 102 zum Verteilen von Hochspannung auf dem Triebwagen 101.

Der Triebwagen 101 wird über einen Stromabnehmer in Form eines Pantographen 103 aus einer Oberleitung 104 mit Hochspannung versorgt. Der Pantograph 103 ist mit einer isolierten Unterschwinge 103.2 versehen, sodass er ohne weitere Isolatoren oder dergleichen auf dem Dach 101.1 des Triebwagens 101 befestigt sein kann. Der Pantograph 103 weist eine integrierte Hochspannungskupplung 103.3 auf, mittels derer er über eine entsprechend feststoffisolierte Zuleitung 105 elektrisch mit der Anordnung 102 verbunden ist.

Die Anordnung 102 umfasst mehrere aktive Hochspannungskomponenten 102.1 bis 102.6, die in einem gemeinsamen Hochspannungscontainer 102.7 montiert sind. Der Hochspannungscontainer 102.7 stellt mit anderen Worten eine Trägereinrichtung dar, welche die aktiven Hochspannungskomponenten 102.1 bis 102.6 der Anordnung 102 aufnimmt. Der Hochspannungscontainer 102.7 ist im Innern des Triebwagens 101 in einem Unterflurbereich 101.2 des Triebwagens 101 angeordnet.

Die äußere elektrische Isolation der aktiven Hochspannungskomponenten 102.1 bis 102.6 ist jeweils vollständig, d.h. unter Ausschluss von gasförmigen Isolationsmedien, wie Luft oder dergleichen, durch eine Feststoffisolierung 102.8, 102.9, 102.10 bzw. 102.11 gebildet, welche die zugehörigen aktiven Hochspannungskomponenten 102.1 bis 102.6 vollständig und lückenlos umschließt. Die aktiven Hochspannungskomponenten 102.1 bis 102.6 können hierzu beispielsweise in dem festen Isolationsmaterial eingegossen sein oder mit diesem umspritzt sein etc. Dabei sind die aktiven Hochspannungskomponenten 102.1 bis 102.6 jeweils durch eine zugehörige Feststoffisolierung 102.8 bis 102.11 derart elektrisch gegenüber ihrer Umgebung gekapselt, dass höchstenfalls ihre elektrischen Anschlüsse Kontaktpunkte zur Umgebung bieten könnten.

Wie der Figur 2 insbesondere zu entnehmen ist, sind die aktiven Hochspannungskomponenten 102.4, 102.5 und 102.6 dabei in einer gemeinsamen Feststoffisolierung 102.11 angeordnet, sodass sie eine einzige vorgefertigte Baugruppe bilden. Diese Baugruppe kann nach ihrer Fertigung vorgeprüft werden, sodass dies nicht erst bei der Montage der Anordnung 102 erfolgen muss, wodurch sich die Prüfzeiten bei der Montage reduzieren.

Die vollständige äußere Isolierung der aktiven Hochspannungskomponenten 102.1 bis 102.6 durch feste Isolierstoffe unter Verzicht auf Luft oder andere Gase als Isoliermedium ermöglicht es, die Baugröße der Hochspannungskomponenten 102.1 bis 102.6 wegen des Wegfalls der Luft- und Kriechstrecken zu verringern. Hierdurch ergibt sich wie erwähnt eine erhebliche Volumen- und Gewichtsersparnis. Durch den Wegfall des spannungsfreien Raumes um die aktiven Hochspannungskomponenten 102.1 bis 102.6 können die Hochspannungskomponenten 102.1 bis 102.6 zudem sehr nahe aneinander angeordnet werden. Hierdurch reduziert sich zum einen der Gesamtbauraum der Anordnung 102 noch weiter und es verkürzen sich die Verbindungen zwischen den Komponenten entsprechend, sodass auch hier weniger Aufwand zu betreiben ist.

Die Verbindung zwischen der ersten aktiven Hochspannungskomponente 102.1 und der zweiten aktiven Hochspannungskomponente 102.2 erfolgt über eine erste Schnittstelleneinrichtung 102.12 und eine zweite Schnittstelleneinrichtung 102.13. Die erste Schnittstelleneinrichtung 102.12 ist als an der ersten Feststoffisolierung 102.8 montierte erste Steckerkomponente ausgebildet, während die zweite Schnittstelleneinrichtung 102.13 als hierzu komplementäre, an der zweiten Feststoffisolierung 102.9 montierte zweite Steckerkomponente ausgebildet ist.

Die äußere elektrische Isolation der ersten Schnittstelleneinrichtung 102.12 und der zweiten Schnittstelleneinrichtung 102.13 ist jeweils durch eine lückenlos an der ersten Feststoffisolierung 102.8 bzw. der zweiten Feststoffisolierung 102.9 befestigten separaten Feststoffisolierung übernommen. Um die erste aktive Hochspannungskomponente 102.1 mit der zweiten aktiven Hochspannungskomponente 102.2 zu koppeln, müssen lediglich die erste Steckerkomponente 102.12 und die zweite Steckerkomponente 102.13 ineinander gesteckt werden, wodurch sich dann ebenfalls eine vorgefertigte Baugruppe ergibt, die gegebenenfalls vorgeprüft werden kann. Eine zusätzliche mechanische Verbindung kann dabei dann gegebenenfalls über die Feststoffisolierungen 102.8 und 102.9 erfolgen. Diese Gestaltung ermöglicht es, die beiden Hochspannungskomponenten 102.1 und 102.2 sehr nahe zueinander anzuordnen, sodass sich eine besonders kompakte Baugruppe ergibt.

Die Verbindung zwischen der zweiten aktiven Hochspannungskomponente 102.2 und der dritten aktiven Hochspannungskomponente 102.3 erfolgt über eine externe passive Verbindungsleitung 102.14. Diese Verbindungsleitung 102.14 ist ebenfalls vollständig von einer Feststoffisolierung umgeben, sodass auch ihre elektrische Isolation im Wesentlichen vollständig hierdurch erfolgt. Die Kopplung der Verbindungsleitung 102.14 erfolgt dabei über gegenüber der Umgebung durch einen Feststoff vollständig elektrisch isolierte Schraubkontakte an der Oberfläche der Feststoffisolierung 102.9 bzw. der Feststoffisolierung 102.10. Es versteht sich jedoch, dass bei anderen Varianten der Erfindung auch hier wieder Steckkontakte oder andersartige Verbindungselemente vorgesehen sein können.

Die Verbindung zwischen der dritten aktiven Hochspannungskomponente 102.3 und der vierten aktiven Hochspannungskomponente 102.4 erfolgt ebenfalls über eine externe passive Verbindungsleitung 102.15. Diese Verbindungsleitung 102.15 ist ebenfalls vollständig von einer Feststoffisolierung umgeben, sodass auch ihre elektrische Isolation im Wesentlichen vollständig hierdurch erfolgt. Die Kopplung der Verbindungsleitung 102.15 erfolgt dabei über gegenüber der Umgebung durch einen Feststoff vollständig elektrisch isolierte Schraubkontakte an der Oberfläche der Feststoffisolierung 102.10 bzw. der Feststoffisolierung 102.11.

Die Verbindung zwischen der vierten aktiven Hochspannungskomponente 102.4 und der fünften aktiven Hochspannungskomponente 102.5 sowie zwischen der fünften aktiven Hochspannungskomponente 102.5 und der sechsten aktiven Hochspannungskomponente 102.6 erfolgt über in der Feststoffisolierung 102.11 eingebettete und damit durch diese ebenfalls im Wesentlichen vollständig isolierte Verbindungen.

Über eine weitere externe passive Verbindungsleitung 102.16 ist die sechste aktive Hochspannungskomponente 102.6 und damit die Anordnung 102 mit nachgeschalteten Komponenten der elektrischen Einrichtung des Triebfahrzeugs 101 verbunden. Diese Verbindungsleitung 102.16 ist ebenfalls vollständig von einer Feststoffisolierung umgeben, sodass auch ihre elektrische Isolation im Wesentlichen vollständig hierdurch erfolgt. Die Kopplung der Verbindungsleitung 102.16 erfolgt dabei wiederum über isolierend abgedeckte Schraubkontakte an der Oberfläche der Feststoffisolierung 102.11.

Bei den nachgeschalteten Komponenten der elektrischen Einrichtung des Triebfahrzeugs 101 kann es sich wiederum um aktive Hochspannungskomponenten handeln.. Vorzugsweise umfasst die Anordnung 102 sämtliche aktiven Hochspannungskomponenten des Triebfahrzeugs 101, die dem Stromabnehmer nachgeschaltet und einer nachfolgenden Wandlereinrichtung, beispielsweise einem Transformator wie dem Haupttransformator, vorgeschaltet sind.

Der Hochspannungscontainer 102.7 kann mit den darin montierten aktiven Hochspannungskomponenten 102.1 bis 102.6 als eine einzige Baugruppe vormontiert und vorgeprüft werden. Die Montage- und Prüfzeiten der aktiven Hochspannungskomponenten am Triebfahrzeug verkürzen sich dadurch erheblich. Mit anderen Worten ist die Montage eines komplett vorgefertigten und geprüften Hochspannungscontainers möglich.

Durch den Wegfall einer Vielzahl von Schnittstellen, Kupplungen etc. der bislang separat montierten aktiven Hochspannungskomponenten lässt sich auf diesem Weg eine kostengünstige Endmontage erreichen. Es versteht sich hierbei, dass gegebenenfalls einzelne Komponenten, die nicht in Feststoffisolierung vorhanden sind, die Hochspannungsanlage in traditioneller Anordnung unterflur oder an anderer Stelle im Triebwagen 101 ergänzen können.

Durch die Anordnung des Hochspannungscontainers 102.7 unterflur ist eine bedeutende Einsparung an Bauhöhe zu erreichen. Der gesamte Dachbereich 101.1 kann angehoben werden. Dies wirkt sich besonders vorteilhaft bei der Unterdachanordnung von Systemen wie Klimaanlagen etc. aus. Ebenso lässt sich dieser Platzgewinn sehr vorteilhaft bei der konstruktiven Gestaltung von doppelstöckigen Triebzügen nutzen.

### Drittes Ausführungsbeispiel

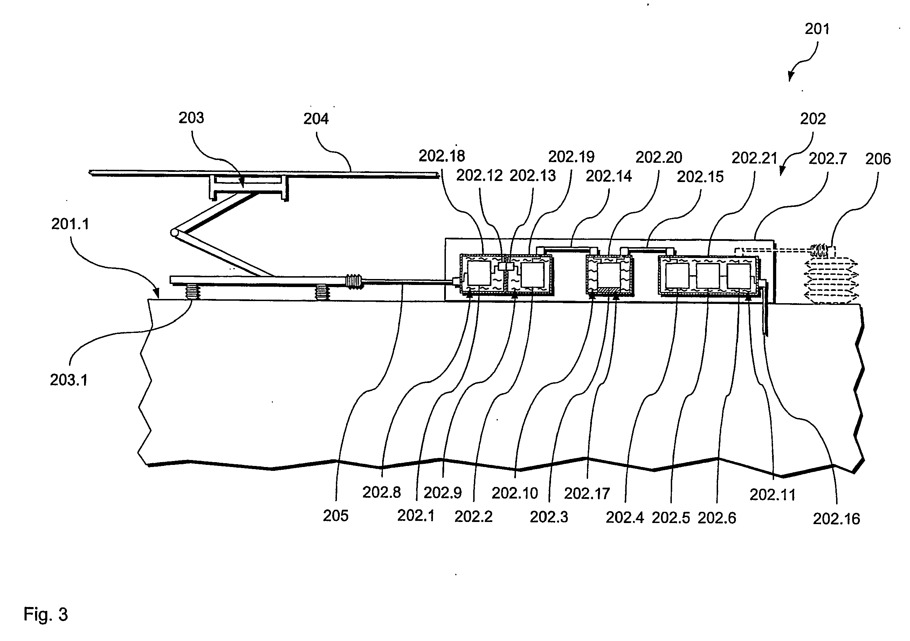

Figur 3 zeigt einen schematischen Schnitt durch eine weitere bevorzugte Ausführungsform des erfindungsgemäßen Fahrzeugs in Form eines schienengebundenen Triebwagens 201 mit einer bevorzugten Ausführungsform der erfindungsgemäßen Anordnung 202 zum Verteilen von Hochspannung auf dem Triebwagen 201.

Der Triebwagen 201 wird über einen Stromabnehmer in Form eines Pantographen 203 aus einer Oberleitung 204 mit Hochspannung versorgt. Der über Isolatoren 203.1 auf dem Dach 201.1 des Triebwagens 201 befestigte Pantograph 203 ist über eine entsprechend feststoffisolierte Zuleitung 205 elektrisch mit der Anordnung 202 verbunden.

Die Anordnung 202 umfasst mehrere aktive Hochspannungskomponenten 202.1 bis 202.6, die in einem gemeinsamen Dachcontainer 202.7 montiert sind. Der Dachcontainer 202.7 stellt mit anderen Worten eine Trägereinrichtung dar, welche die aktiven Hochspannungskomponenten 202.1 bis 202.6 der Anordnung 202 aufnimmt. Der Dachcontainer 202.7 kann insbesondere bei Hochgeschwindigkeitszügen entsprechend strömungsgünstig geformt sein.

Die elektrische Isolation der Hochspannungskomponenten 202.1 bis 202.6 ist zumindest teilweise durch ein flüssiges Isolationsmedium in Form eines Mineralöls 202.8 bis 202.11 realisiert. Hierzu sind die aktiven Hochspannungskomponenten 202.1 bis 202.6 jeweils zumindest teilweise durch ein sie kontaktierend umspülendes Mineralöl 202.8 bis 202.11 sowie teils durch eine Feststoffisolierung 202.17 derart elektrisch gegenüber ihrer Umgebung gekapselt, dass höchstenfalls ihre elektrischen Anschlüsse Kontaktpunkte zur Umgebung bieten könnten.

Das Mineralöl 202.8 bis 202.11 ist dabei jeweils im Inneren eines entsprechend abgedichteten Gehäuses 202.18 bis 202.21 aufgenommen, welches jeweils auch die zugehörigen Hochspannungskomponenten 202.1 bis 202.6 aufnimmt.

So ist die elektrische Isolation der aktiven Hochspannungskomponenten 202.1, 202.2 und 202.4 bis 202.6 jeweils vollständig, d.h. unter Ausschluss von gasförmigen Isolationsmedien, wie Luft oder dergleichen, durch das Mineralöl 202.8, 202.9 bzw. 202.11 gebildet, welwelche die zugehörigen Hochspannungskomponenten 202.1, 202.2, 202.4, 202.5 bzw. 202.6 vollständig umspült und damit vollständig kontaktierend umschließt. Die Hochspannungskomponenten 202.1, 202.2, 202.4, 202.5 bzw. 202.6 sind mit anderen Worten vollständig in das Mineralöl 202.8, 202.9 bzw. 202.11 eingetaucht.

Lediglich an den jeweiligen (vernachlässigbaren) Kontaktflächen der Hochspannungskomponenten 202.1, 202.2 und 202.4 bis 202.6 mit ihren - in Figur 3 nicht dargestellten - Halterungen, welche den Abstand der betreffenden Hochspannungskomponente 202.1, 202.2 und 202.4 bis 202.6 zur Wandung des zugehörigen Gehäuses 202.18 bis 202.21 herstellen, liegt gegebenenfalls kein Kontakt mit dem Mineralöl vor. Es versteht sich hierbei, dass diese Halterungen und/oder das zugehörige Gehäuse 202.18 bis 202.21 dann zumindest in geeigneten Bereichen entsprechend isoliert oder isolierend ausgebildet sein müssen.

Wie der Figur 3 insbesondere zu entnehmen ist, sind die aktiven Hochspannungskomponenten 202.4, 202.5 und 202.6 dabei in einem gemeinsamen Gehäuse 202.21 in einem gemeinsamen Bad aus dem Mineralöl 202.11 angeordnet, sodass sie eine einzige vorgefertigte Baugruppe bilden. Diese Baugruppe kann nach ihrer Fertigung vorgeprüft werden, sodass dies nicht erst bei der Montage der Anordnung 202 erfolgen muss, wodurch sich die Prüfzeiten bei der Montage reduzieren.

Die aktive Hochspannungskomponente 202.3 ist demgegenüber in einem vollständig , d.h. unter Ausschluss von gasförmigen Isolationsmedien, wie Luft oder dergleichen, mit Mineralöl 202.10 gefüllten Hohlraum eines Gehäuses oder Containers 202.20 angeordnet. Die Hochspannungskomponente 202.3 sitzt dabei auf einem Sockel 202.17 aus einer Feststoffisolierung. Die äußere elektrische Isolation der aktiven Hochspannungskomponente 202.3 ist hier somit vollständig durch die Feststoffisolierung des Sockels 202.17 und das Mineralöl 202.10 übernommen. Es versteht sich hierbei, dass gegebenenfalls auch mehrere Hochspannungskomponenten in derartigen Containern gekapselt sein können.

Die vollständige äußere Isolierung der aktiven Hochspannungskomponenten 202.1 bis 202.6 durch flüssige bzw. feste Isolierstoffe unter Verzicht auf Luft oder andere Gase als Isoliermedium ermöglicht es, die Baugröße der aktiven Hochspannungskomponenten 202.1 bis 202.6 wegen des Wegfalls der Luft- und Kriechstrecken zu verringern. Das jeweils verwendete Mineralöl weist im Betrieb, d. h. unter realen Betriebsbedingungen des Fahrzeugs 201, eine elektrische Durchschlagfestigkeit auf, die wenigstens dem 10-fachen der elektrischen Durchschlagfestigkeit von Luft - unter den entsprechenden realen Betriebsbedingungen des Fahrzeugs - entspricht. Hierdurch lassen sich bei den eingangs genannten Betriebsbedingungen für Schienenfahrzeuge zum Beispiel Isolationsstrecken unterhalb von 10 cm, insbesondere im Bereich von wenigen Zentimetern, realisieren. Hierdurch ergibt sich wie erwähnt eine erhebliche Volumen- und Gewichtsersparnis.

Durch den Wegfall des spannungsfreien Raumes um die aktiven Hochspannungskomponenten 202.1 bis 202.6 können die aktiven Hochspannungskomponenten 202.1 bis 202.6 zudem sehr nahe aneinander angeordnet werden. Hierdurch reduziert sich zum einen der Gesamtbauraum der Anordnung 202 noch weiter und es verkürzen sich die passiven Verbindungen zwischen den aktiven Komponenten entsprechend, sodass auch hier weniger Aufwand zu betreiben ist.

Das Mineralöl 202.8 bis 202.11 zeichnet sich durch eine gegenüber gasförmigen Medien verbesserte Wärmeabfuhr aus, sodass sich die Kühlung der aktiven Hochspannungskomponenten 202.1 bis 202.6 in besonders einfacher Weise realisieren lässt. Gegebenenfalls kann das Mineralöl 202.8 bis 202.11 das Kühlmedium eines oder mehrerer - in Figur 3 nicht näher dargestellter- Kühlkreisläufe bilden.

Die Verbindung zwischen der ersten aktiven Hochspannungskomponente 202.1 und der zweiten aktiven Hochspannungskomponente 202.2 erfolgt über eine erste Schnittstelleneinrichtung 202.12 und eine zweite Schnittstelleneinrichtung 202.13. Die erste Schnittstelleneinrichtung 202.12 ist als in dem ersten Gehäuse 202.18 eingebettete erste Steckerkomponente ausgebildet, während die zweite Schnittstelleneinrichtung 202.13 als hierzu komplementäre, in dem zweiten Gehäuse 202.19 eingebettete zweite Steckerkomponente ausgebildet ist.

Besteht das erste Gehäuse 202.18 bzw. das zweite Gehäuse 202.19 aus einem elektrisch isolierenden Feststoff, so kann die äußere elektrische Isolation der ersten Schnittstelleneinrichtung 202.12 und der zweiten Schnittstelleneinrichtung 202.13 durch das erste Gehäuse 202.18 bzw. das zweite Gehäuse 202.19 selbst übernommen sein. Ist dies nicht der Fall, besteht das betreffende Gehäuse 202.18 bzw. 202.19 beispielweise aus einem Metall oder einem anderen entsprechend elektrisch leitfähigen Material, so muss im Bereich des Durchtritts der Schnittstelleneinrichtung 202.12 bzw. 202.13 durch die Gehäusewand eine entsprechende Feststoffisolierung der Schnittstelleneinrichtung 202.12 bzw. 202.13 vorgesehen sein.

Es versteht sich hierbei, dass die äußere elektrische Isolation der ersten Schnittstelleneinrichtung und/oder der zweiten Schnittstelleneinrichtung in beiden Fällen gegebenenfalls auch durch eine gesonderte Feststoffisolierung realisiert sein kann. Diese schließt dann jedoch lückenlos an die jeweilige Gehäusewand an, um die lückenlose äußere Isolation zu gewährleisten.

Um die erste Hochspannungskomponente 202.1 mit der zweiten Hochspannungskomponente 202.2 zu koppeln, müssen lediglich die erste Steckerkomponente 202.12 und die zweite Steckerkomponente 202.13 ineinander gesteckt werden, wodurch sich dann ebenfalls eine vorgefertigte Baugruppe ergibt, die gegebenenfalls vorgeprüft werden kann. Eine zusätzliche mechanische Verbindung kann dabei dann gegebenenfalls über die Gehäuse 202.18 und 202.19 erfolgen. Diese Gestaltung ermöglicht es, die beiden Hochspannungskomponenten 202.1 und 202.2 sehr nahe zueinander anzuordnen, sodass sich eine besonders kompakte Baugruppe ergibt.

Die Verbindung zwischen der zweiten aktiven Hochspannungskomponente 202.2 und der dritteln Hochspannungskomponente 202.3 erfolgt über eine externe passive Verbindungsleitung 202.14, wie dies oben im Zusammenhang mit der Figur 1 für die Komponenten 2.2, 2.3 und 2.14 beschrieben wurde, sodass hier lediglich auf die obigen Ausführungen verwiesen wird.

Die Verbindung zwischen der dritten aktiven Hochspannungskomponente 202.3 und der vierten aktiven Hochspannungskomponente 202.4 erfolgt ebenfalls über eine externe passive Verbindungsleitung 202.15, wie dies oben im Zusammenhang mit der Figur 1 für die Komponenten 2.3, 2.4 und 2.15 beschrieben wurde, sodass auch hier lediglich auf die obigen Ausführungen verwiesen wird.

Die Verbindung zwischen der vierten aktiven Hochspannungskomponente 202.4 und der fünften aktiven Hochspannungskomponente 202.5 sowie zwischen der fünften aktiven Hochspannungskomponente 202.5 und der sechsten aktiven Hochspannungskomponente 202.6 erfolgt über in dem Mineralöl 202.11 vollständig eingetauchte und damit durch dieses ebenfalls im Wesentlichen vollständig isolierte Verbindungen.

Über eine weitere externe passive Verbindungsleitung 202.16 ist die sechste Hochspannungskomponente 202.6 und damit die Anordnung 202 mit nachgeschalteten Komponenten der elektrischen Einrichtung des Triebfahrzeugs 201 verbunden, beispielsweise mit dem Haupttransformator des Triebfahrzeugs 201. Diese Verbindungsleitung 202.16 ist ebenfalls vollständig von einer Feststoffisolierung umgeben, sodass auch ihre elektrische Isolation im Wesentlichen vollständig hierdurch erfolgt. Die Kopplung der Verbindungsleitung 202.16 erfolgt dabei wiederum über gegenüber der Umgebung durch einen Feststoff vollständig elektrisch isolierte Schraubkontakte an der Oberfläche der Feststoffisolierung 202.11.

Bei den nachgeschalteten Komponenten der elektrischen Einrichtung des Triebfahrzeugs 201 kann es sich wiederum um aktive Hochspannungskomponenten handeln. Vorzugsweise umfasst die Anordnung 202 sämtliche aktiven Hochspannungskomponenten des Triebfahrzeugs 201, die dem Stromabnehmer nachgeschaltet und einer nachfolgenden Wandlereinrichtung, beispielsweise einem Transformator wie dem Haupttransformator, vorgeschaltet sind.

Der Dachcontainer 202.7 kann mit den darin montierten aktiven Hochspannungskompönenten 202.1 bis 202.6 als eine einzige Baugruppe vormontiert und vorgeprüft werden. Die Montage- und Prüfzeiten der aktiven Hochspannungskomponenten am Triebfahrzeug verkürzen sich dadurch erheblich. Mit anderen Worten ist die Montage eines komplett vorgefertigten und geprüften Hochspannungscontainers möglich.

Durch den Wegfall einer Vielzahl von Schnittstellen, Kupplungen etc. der bislang separat montierten aktiven Hochspannungskomponenten lässt sich auf diesem Weg eine kostengünstige Endmontage erreichen. Besonders im Bereich des Hochgeschwindigkeitsverkehrs lassen sich Anforderungen aus der Aerodynamik und Aeroakustik an das Containerdesign leicht berücksichtigen.

Es versteht sich hierbei, dass gegebenenfalls einzelne aktive Hochspannungskomponenten, die nicht in vollständiger Isolierung durch Feststoffe und/oder flüssige Isolationsmedien vorhanden sind, die Hochspannungsanlage in traditioneller Anordnung auf dem Dach ergänzen können, wie dies in Figur 3 durch die gestrichelte Kontur 206 angedeutet ist. Ebenso versteht es sich, dass derartige aktive Hochspannungskomponenten mit nicht vollständiger Feststoffisolierung, insbesondere aktive Hochspannungskomponenten mit nicht vollständiger Isolierung durch Feststoffe und/oder flüssige Isolationsmedien, die bei geringeren Betriebsspannungen, z: B. 3000V DC oder 1500V DC, zum Einsatz kommen, auch im Dachcontainer 202.7 angeordnet werden können.

Hierbei versteht es sich im Übrigen, dass die Verwendung von flüssigen Isolationsmedien nicht auf eine Anwendung im Dachbereich des Fahrzeugs beschränkt ist, sondern natürlich auch im Unterflurbereich (ähnlich der Ausführung aus Figur 2) oder an anderer Stelle im Fahrzeug erfolgen kann.

Bei den aktiven Hochspannungskomponenten 202.1 bis 202.6 kann es sich wie erwähnt um beliebige aktive Hochspannungskomponenten handeln, die sich insbesondere gegebenenfalls auf für den Mehrsystembetrieb, also den Einsatz in Verbindung mit unterschiedlichen Spannungssystemen. Hierbei kann es sich beispielsweise um Fühler zur Erkennung des Spannungssystems, Überspannungsschutzelemente im Gleich- und Wechselspannungssystem, Leistungsschaltelemente für ein Wechselspannungssystem oder für ein Gleichspannungssystem, Schutzelemente vor transienten Spannungsspitzen, Schaltelemente für Trennschaltungen, Fühler zur Strommessung in einem Gleich- und Wechselspannungssystem etc. handeln. Vorzugsweise umfasst die Anordnung 202 sämtliche dieser aktiven Hochspannungskomponenten des Triebfahrzeugs 201.

Die vorliegende Erfindung wurde vorstehend anhand von Beispielen von schienengebundenen Triebwagen beschrieben. Es versteht sich jedoch, dass sie auch in Verbindung mit beliebigen anderen, spurgeführten oder nicht spurgeführten Fahrzeugen zur Anwendung kommen kann. Hierbei kann es sich beispielsweise um Oberleitungsbusse oder dergleichen handeln.

## Patentansprüche

1. Anordnung mit einer Mehrzahl von aktiven Hochspannungskomponenten (2.1 bis 2.6; 102.1 bis 102.6; 202.1 bis 202.6) zum Verteilen von Hochspannung auf einem Fahrzeug (1; 101; 201), insbesondere einem Schienenfahrzeug, **dadurch gekennzeichnet, dass**
- die äußere elektrische Isolation wenigstens einer ersten aktiven Hochspannungskomponente (2.1 bis 2.6; 102.1 bis 102.6) im Wesentlichen vollständig durch eine erste Feststoffisolierung (2.8 bis 2.11; 102.8 bis 102.11) realisiert ist
oder
- die äußere elektrische Isolation wenigstens einer ersten aktiven Hochspannungskomponente (202.3) im Wesentlichen vollständig durch eine Kombination aus einer die aktive Hochspannungskomponente (202.3) teilweise kapselnden ersten Feststoffisolierung (202.17) und einem die aktive Hochspannungskomponente (202.3) teilweise kapselnden flüssigen Isolationsmedium (202.10) realisiert ist.

2. Anordnung nach Anspruch 1, **dadurch gekennzeichnet, dass** die erste aktive Hochspannungskomponente (2.1, 2.2, 2.4, 2.5, 2.6; 102.1 bis 102.6; 202.1 bis 202.6) zur Herstellung der äußeren elektrischen Isolation von der Umgebung im Wesentlichen vollständig durch die erste Feststoffisolierung (2.8, 2.9, 2.11; 102.8 bis 102.11; 202.17) und/oder das flüssige Isolationsmedium (202.8 bis 202.11) abgekapselt ist.

3. Anordnung nach Anspruch 1 oder 2, **dadurch gekennzeichnet, dass** die äußere elektrische Isolation der ersten aktiven Hochspannungskomponente (2.1, 2.2, 2.4, 2.5, 2.6; 102.1 bis 102.6; 202.1 bis 202.6) im Wesentlichen unter Ausschluss von gasförmigen Medien, insbesondere Luft, als Isolationsmedium realisiert ist

4. Anordnung nach einem der vorhergehenden Ansprüche, **dadurch gekennzeichnet, dass** die äußere elektrische Isolation wenigstens einer mit der ersten aktiven Hochspannungskomponente (2.1 bis 2.6; 102.1 bis 102.6; 202.1 bis 202.6) elektrisch verbundenen zweiten aktiven Hochspannungskomponente (2.1 bis 2.6; 102.1 bis 102.6; 202.1 bis 202.6) im Wesentlichen vollständig durch eine Feststoffisolierung (2.8 bis 2.11; 102.8 bis 102.11; 202.17) und/oder ein flüssiges Isolationsmedium (202.8 bis 202.11) realisiert ist.

5. Anordnung nach Anspruch 4, **dadurch gekennzeichnet, dass** die erste aktive Hochspannungskomponente (2.1 bis 2.6; 102.1 bis 102.6; 202.1 bis 202.6) mit der zweiten Hochspannungskomponente (2.1 bis 2.6; 102.1 bis 102.6; 202.1 bis 202.6) über ein Verbindungselement (2.12 bis 2.15; 102.12 bis 102.15; 202.12 bis 202.15) verbunden ist, dessen äußere elektrische Isolation im Wesentlichen vollständig durch eine Feststoffisolierung realisiert ist.

6. Anordnung nach Anspruch 5, **dadurch gekennzeichnet, dass**
- die erste aktive Hochspannungskomponente (2.1; 102.1; 202.1) eine integrierte erste elektrische Schnittstelleneinrichtung (2.12; 102.12; 202.12) aufweist und
- die zweite aktive Hochspannungskomponente (2.2; 102.2; 202.2) eine integrierte zweite elektrische Schnittstelleneinrichtung (2.13; 102.13; 202.13) aufweist, wobei
- die elektrische Verbindung zwischen der ersten aktiven Hochspannungskomponente (2.1; 102.1; 202.1) und der zweiten aktiven Hochspannungskomponente (2.2; 102.2; 202.12) durch unmittelbare Kopplung der ersten elektrischen Schnittstelleneinrichtung (2.12; 102.12; 202.12) mit der zweiten elektrischen Schnittstelleneinrichtung (2.13; 102.13; 202.13) realisiert ist.

7. Anordnung nach Anspruch 6, **dadurch gekennzeichnet, dass**
- die äußere elektrische Isolation der ersten elektrischen Schnittstelleneinrichtung (2.12; 102.12) im Wesentlichen vollständig durch die Feststoffisolierung (2.8; 102.8) der ersten aktiven Hochspannungskomponente (2.1; 102.1) realisiert ist
und/oder
- die äußere elektrische Isolation der zweiten elektrischen Schnittstelleneinrichtung (2.13; 102.13) im Wesentlichen vollständig durch die Feststoffisolierung (2.9; 102.9) der zweiten aktiven Hochspannungskomponente (2.2; 102.2) realisiert ist.

8. Anordnung nach Anspruch 6 oder 7, **dadurch gekennzeichnet, dass** die erste elektrische Schnittstelleneinrichtung (2.12; 102.12; 202.12) und die zweite elektrische Schnittstelleneinrichtung (2.13; 102.13; 202.13) nach Art einer Steckverbindung ausgebildet sind.

9. Anordnung nach einem der vorhergehenden Ansprüche, **dadurch gekennzeichnet, dass** die äußere elektrische Isolation von wenigstens zwei aktiven Hochspannungskomponenten (2.4, 2.5, 2.6; 102.4, 102.5, 102.6; 202.4, 202.5, 202.6) im Wesentlichen vollständig durch eine gemeinsame Isolierung mittels einer Feststoffisolierung (2.11; 102.11) und/oder eines flüssigen Isolationsmediums (202.11) realisiert ist.

10. Anordnung nach Anspruch 9, **dadurch gekennzeichnet, dass** die beiden Hochspannungskomponenten (2.4, 2.5, 2.6; 102.4, 102.5, 102.6; 202.4, 202.5, 202.6) durch eine elektrische Verbindung miteinander verbunden sind, wobei die äußere elektrische Isolation der elektrischen Verbindung insbesondere im Wesentlichen vollständig durch die gemeinsame Feststoffisolierung (2.11; 102.11) der beiden aktiven Hochspannungskomponenten (2.4, 2.5, 2.6; 102.4, 102.5, 102.6; 202.4, 202.5, 202.6) und/oder das flüssige Isolationsmedium (202.11) realisiert ist.

11. Anordnung nach einem der vorhergehenden Ansprüche, **dadurch gekennzeichnet, dass** eine Trägereinrichtung (2.7; 102.7; 202.7), insbesondere ein Container, zur gemeinsamen Aufnahme wenigstens eines Teils der aktiven Hochspannungskomponenten (2.1 bis 2.6; 102.1 bis 102.6: 202.1 bis 202.6) vorgesehen ist.

12. Anordnung nach einem der vorhergehenden Ansprüche, **dadurch gekennzeichnet, dass** die aktiven Hochspannungskomponenten (2.1 bis 2.6; 102.1 bis 102.6; 202.1 bis 202.6)
- wenigstens einen Fühler zur Erkennung des Spannungssystems und/oder
- wenigstens ein Schutzelement vor Überspannungen im Gleich- und/oder Wechselspannungssystem und/oder
- wenigstens ein Leistungsschaltelement für ein Wechselspannungssystem und/oder
- wenigstens ein Leistungsschaltelement für ein Gleichspannungssystem und/oder
- wenigstens ein Schutzelement vor transienten Spannungsspitzen und/oder
- wenigstens ein Schaltelement für Trenn- und/oder Erdungsschaltungen und/oder
- wenigstens einen Fühler zur Strommessung in einem Gleich- und/oder Wechselspannungssystem
umfassen.

13. Anordnung nach einem der vorhergehenden Ansprüche, **dadurch gekennzeichnet, dass**
- ein Gehäuse (202.18 bis 202.21) vorgesehen ist, in dem wenigstens die erste aktive Hochspannungskomponente (202.1 bis 202.6) angeordnet ist,
- das flüssige Isolationsmedium (202.8 bis 202.11) derart in dem Gehäuse (202.18 bis 202.21) aufgenommen ist, dass wenigstens die erste aktive Hochspannungskomponente (202.1 bis 202.6) zumindest teilweise von dem flüssigen Isolationsmedium (202.8 bis 202.11) umspült ist.

14. Anordnung nach Anspruch 13, **dadurch gekennzeichnet, dass** wenigstens die erste aktive Hochspannungskomponente (202.1 bis 202.6) im Wesentlichen vollständig von dem flüssigen Isolationsmedium (202.8 bis 202.11) umspült ist.

15. Anordnung nach einem der vorhergehenden Ansprüche, **dadurch gekennzeichnet, dass** als flüssiges Isolationsmedium (202.8 bis 202.11) ein Medium verwendet wird, das unter Betriebsbedingungen des Fahrzeugs (201), eine elektrische Durchschlagfestigkeit aufweist, die wenigstens dem 10-fachen der elektrischen Durchschlagfestigkeit von Luft entspricht.

16. Anordnung nach einem der vorhergehenden Ansprüche, **dadurch gekennzeichnet, dass** als flüssiges Isolationsmedium (202.8 bis 202.11) ein Mineralöl, eine Silikonflüssigkeit oder eine Esterflüssigkeit verwendet wird.

17. Fahrzeug, insbesondere Schienenfahrzeug, mit wenigstens einem Stromabnehmer (3; 103; 203) und einer damit elektrisch verbundenen Anordnung (2; 102; 202) nach einem der vorhergehenden Ansprüche.

18. Fahrzeug nach Anspruch 17, **dadurch gekennzeichnet, dass** mehrere, insbesondere sämtliche, über den Stromabnehmer (3; 203) gespeisten aktiven Hochspannungskomponenten (2.1 bis 2.6; 202.1 bis 202.6) des Fahrzeugs (1; 201) auf dem Fahrzeugdach (1.1; 201.1) angeordnet sind, wobei sie insbesondere durch eine gemeinsame Trägereinrichtung (2.7; 207) gehalten sind.

19. Fahrzeug nach Anspruch 18, **dadurch gekennzeichnet, dass** die Trägereinrichtung (2.7; 207) als, insbesondere aerodynamisch geformter, Dachcontainer ausgebildet ist

20. Fahrzeug nach Anspruch 17, **dadurch gekennzeichnet, dass** mehrere, insbesondere sämtliche, Ober den Stromabnehmer (103) gespeisten aktiven Hochspannungskomponenten (102.1 bis 102.6) des Fahrzeugs (101) in einem Unterflurbereich (101.2) angeordnet sind, wobei sie insbesondere durch eine gemeinsame Trägereinrichtung (102.7) gehalten sind.

21. Fahrzeug nach einem der Ansprüche 18 bis 20, **dadurch gekennzeichnet, dass** die Trägereinrichtung (2.7; 102.7; 202.7) mit den von ihr aufgenommenen aktiven Hochspannungskomponenten (2.1 bis 2.6; 102.1 bis 102.6; 202.1 bis 202.6) als separat montierbare, vorgefertigte, insbesondere vorgeprüfte, Baugruppe ausgebildet ist.

22. Fahrzeug nach einem der Ansprüche 17 bis 21, **dadurch gekennzeichnet, dass** der Stromabnehmer (103) mit isolierter Unterschwinge (103.2) ausgeführt ist und insbesondere eine integrierte Hochspannungskupplung (103.3) aufweist

## Claims

1. Arrangement with a plurality of active high-voltage components (2.1 to 2.6; 102.1 to 102.6; 202.1 to 202.6) for distributing high voltage on a vehicle (1; 101; 201), in particular a rail vehicle, **characterised in that**
- the external electrical insulation of at least a first active high-voltage component (2.1 to 2.6; 102.1 to 102.6) is realised substantially completely by a first solid insulation (2.8 to 2.11; 102.8 to 102.11)
or
- the external electrical insulation of at least a first active high-voltage component (202.3) is substantially completely realised by a combination of a first solid insulation (202.17) partially encapsulating the active high-voltage component (202.3) and a liquid insulation medium (202.10) partially encapsulating the active high-voltage component (202.3).

2. Arrangement according to claim 1, **characterised in that** the first active high-voltage component (2.1, 2.2, 2.4, 2.5, 2.6; 102.1 to 102.6; 202.1 to 202.6) is substantially completely encapsulated by the first solid insulation (2.8, 2.9, 2.11; 102.8 to 102.11; 202.17) and/or the liquid insulation medium (202.8 to 202.11) to produce the external electrical insulation from the environment.

3. Arrangement according to claim 1 or 2, **characterised in that** the external electrical insulation of the first active high-voltage component (2.1, 2.2, 2.4, 2.5, 2.6; 102.1 to 102.6; 202.1 to 202.6) is substantially realised with the exclusion of gaseous media, in particular air, as the insulation medium.

4. Arrangement according to any one of the preceding claims, **characterised in that** the external electrical insulation of at least one second active high-voltage component (2.1 to 2.6; 102.1 to 102.6; 202.1 to 202.6) electrically connected to the first active high-voltage component (2.1 to 2.6; 102.1 to 102.6; 202.1 to 202.6) is substantially completely realised by a solid insulation (2.8 to 2.11; 102.8 to 102.11; 202.17) and/or a liquid insulation medium (202.8 to 202.11).

5. Arrangement according to claim 4, **characterised in that** the first active high-voltage component (2.1 to 2.6; 102.1 to 102.6; 202.1 to 202.6) is connected to the second high-voltage component (2.1 to 2.6; 102.1 to 102.6; 202.1 to 202.6) by a connecting element (2.12 to 2.15; 102.12 to 102.15; 202.12 to 202.15), the external electrical insulation of which is substantially completely realised by a solid insulation.

6. Arrangement according to claim 5, **characterised in that**
- the first active high-voltage component (2.1; 102.1; 202.1) has an integrated first electrical interface device (2.12; 102.12; 202.12) and
- the second active high-voltage component (2.2; 102.2; 202.2) has an integrated second electrical interface device (2.13; 102.13; 202.13), wherein
- the electrical connection between the first active high-voltage component (2.1; 102.1; 202.1) and the second active high-voltage component (2.2; 102.2; 202.12) is realised by direct coupling of the first electrical interface device (2.12; 102.12; 202.12) to the second electrical interface device (2.13; 102.13; 202.13).

7. Arrangement according to claim 6, **characterised in that**
- the external electrical insulation of the first electrical interface device (2.12; 102.12) is substantially completely realised by the solid insulation (2.8; 102.8) of the first active high-voltage component (2.1; 102.1)
and/or
- the external electrical insulation of the second electrical interface device (2.13; 102.13) is substantially completely realised by the solid insulation (2.9; 102.9) of the second active high-voltage component (2.2; 102.2).

8. Arrangement according to claim 6 or 7, **characterised in that** the first electrical interface device (2.12; 102.12; 202.12) and the second electrical interface device (2.13; 102.13; 202.13) are configured in the manner of a plug connection.

9. Arrangement according to any one of the preceding claims, **characterised in that** the external electrical insulation of at least two active high-voltage components (2.4, 2.5, 2.6; 102.4, 102.5, 102.6; 202.4, 202.5, 202.6) is substantially completely realised by a common insulation by means of a solid insulation (2.11; 102.11) and/or a liquid insulation medium (202.11).

10. Arrangement according to claim 9, **characterised in that** the two high-voltage components (2.4, 2.5, 2.6; 102.4, 102.5, 102.6; 202.4, 202.5, 202.6) are connected to one another by an electrical connection, the external electrical insulation of the electrical connection being, in particular, substantially completely, realised by the common solid insulation (2.11; 102.11) of the two active high-voltage components (2.4, 2.5, 2.6; 102.4, 102.5, 102.6; 202.4, 202.5, 202.6) and/or the liquid insulation medium (202.11).

11. Arrangement according to any one of the preceding claims, **characterised in that** a carrier device (2.7; 102.7; 202.7), in particular a container, is provided for the common receiving of at least a fraction of the active high-voltage components (2.1 to 2.6; 102.1 to 102.6; 202.1 to 202.6).

12. Arrangement according to any one of the preceding claims, **characterised in that** the active high-voltage components (2.1 to 2.6; 102.1 to 102.6; 202.1 to 202.6) comprise
- at least one sensor for detecting the voltage system and/or
- at least one protection element against excess voltages in the direct and/or alternating voltage system and/or
- at least one power switching element for an alternating voltage system and/or
- at least one power switching element for a direct voltage system and/or
- at least one protection element against transient voltage peaks and/or
- at least one switching element for disconnecting and/or earthing circuits and/or
- at least one sensor for measuring current in a direct and/or alternating voltage system.

13. Arrangement according to any one of the preceding claims, **characterised in that**
- a housing (202.18 to 202.21) is provided, in which at least the first active high-voltage component (202.1 to 202.6) is arranged,
- the liquid insulation medium (202.8 to 202.11) is received in the housing (202.18 to 202.21) in such a way that at least the first active high-voltage component (202.1 to 202.6) at least partially has the liquid insulation medium (202.8 to 202.11) flushed around it.

14. Arrangement according to claim 13, **characterised in that** at least the first active high-voltage component (202.1 to 202.6) has the liquid insulation medium (202.8 to 202.11) substantially completely flushed around it.

15. Arrangement according to any one of the preceding claims, **characterised in that** a medium is used as the liquid insulation medium (202.8 to 202.11) which, under operating conditions of the vehicle (201), has an electric sparkover strength, which corresponds at least to 10-times the electric sparkover strength of air.

16. Arrangement according to any one of the preceding claims, **characterised in that** a mineral oil, a silicone liquid or an ester liquid is used as the liquid insulation medium (202.8 to 202.11).

17. Vehicle, in particular rail vehicle, with at least a current collector (3; 103; 203) and an arrangement (2; 102; 202) electrically connected thereto according to any one of the preceding claims.

18. Vehicle according to claim 17, **characterised in that** a plurality of, in particular all, the active high-voltage components (2.1 to 2.6; 202.1 to 202.6) of the vehicle (1; 201) fed by the current collector (3; 203) are arranged on the vehicle roof (1.1; 201.1), wherein they are held, in particular, by a common carrier device (2.7; 207).

19. Vehicle according to claim 18, **characterised in that** the carrier device (2.7; 207) is configured as a roof container, in particular being aerodynamically formed.

20. Vehicle according to claim 17, **characterised in that** a plurality of, in particular all the active high-voltage components (102.1 to 102.6) of the vehicle (101) fed by the current collector (103) are arranged in an under floor region (101.2), wherein they are held, in particular, by a common carrier device (102.7).

21. Vehicle according to any one of claims 18 to 20, **characterised in that** the carrier device (2.7; 102.7; 202.7) with the active high-voltage components (2.1 to 2.6; 102.1 to 102.6; 202.1 to 202.6) received by it is configured as a separately assembleable, prefabricated, in particular prechecked, component assembly.

22. Vehicle according to any one of claims 17 to 21, **characterised in that** the current collector (103) is configured with an insulated lower rocker arm (103.2) and, in particular, has an integrated high-voltage coupling (103.3).

## Revendications

1. Dispositif avec une pluralité de composants actifs à haute tension (2.1 à 2.6; 102.1 à 102.6; 202.1 à 202.6) pour distribuer une haute tension sur un véhicule (1; 101; 201), en particulier un véhicule ferroviaire, **caractérisé en ce que**
- l'isolation électrique externe d'au moins un premier composant actif à haute tension (2.1 à 2.6; 102.1 à 102.6) est réalisée substantiellement complètement par une première isolation solide (2.8 à 2.11; 102.8 à 102.11)
ou
- l'isolation électrique externe d'au moins un premier composant actif à haute tension (202.3) est substantiellement complètement réalisée par une combinaison d'une première isolation solide (202.17) encapsulant partiellement le composant actif à haute tension (202.3) et un moyen d'isolation liquide (202.10) encapsulant partiellement le composant actif à haute tension (202.3).

2. Dispositif selon la revendication 1, **caractérisé en ce que** le premier composant actif à haute tension (2.1, 2.2, 2.4, 2.5, 2.6; 102.1 à 102.6; 202.1 à 202.6) est substantiellement complètement encapsulé par la première isolation solide (2.8, 2.9, 2.11; 102.8 à 102.11; 202.17) et/ou le moyen d'isolation liquide (202.8 à 202.11) pour produire l'isolation électrique externe de l'environnement.

3. Dispositif selon la revendication 1 ou 2, **caractérisé en ce que** l'isolation électrique externe du premier composant actif à haute tension (2.1, 2.2, 2.4, 2.5, 2.6; 102.1 à 102.6; 202.1 à 202.6) est substantiellement réalisée à l'exclusion de moyens gazeux, en particulier l'air, comme moyen d'isolation.

4. Dispositif selon une quelconque des revendications précédentes, **caractérisé en ce que** l'isolation électrique externe d'au moins un second composant actif à haute tension (2.1 à 2.6; 102.1 à 102.6; 202.1 à 202.6) connecté électriquement au premier composant actif à haute tension (2.1 à 2.6; 102.1 à 102.6; 202.1 à 202.6) est substantiellement complètement réalisée par une isolation solide (2.8 à 2.11; 102.8 à 102.11; 202.17) et/ou un moyen d'isolation liquide (202.8 à 202.11).

5. Dispositif selon la revendication 4, **caractérisé en ce que** le premier composant actif à haute tension (2.1 à 2.6; 102.1 à 102.6; 202.1 à 202.6) est connecté au second composant à haute tension (2.1 à 2.6; 102.1 à 102.6; 202.1 à 202.6) par un élément de connexion (2.12 à 2.15; 102.12 à 102.15; 202.12 à 202.15), l'isolation électrique externe duquel est substantiellement complètement réalisée par une isolation solide.

6. Dispositif selon la revendication 5, **caractérisé en ce que**
- le premier composant actif à haute tension (2.1; 102.1; 202.1) a un premier dispositif d'interface électrique intégré (2.12; 102.12; 202.12) et
- le second composant actif à haute tension (2.2; 102.2; 202.2) a un second dispositif d'interface électrique intégré (2.13; 102.13; 202.13), où
- la connexion électrique entre le premier composant actif à haute tension (2.1; 102.1; 202.1) et le second composant actif à haute tension (2.2; 102.2; 202.12) est réalisée par couplage direct du premier dispositif d'interface électrique (2.12; 102.12; 202.12) au second dispositif d'interface électrique (2.13; 102.13; 202.13).

7. Dispositif selon la revendication 6, **caractérisé en ce que**
- l'isolation électrique externe du premier dispositif d'interface électrique (2.12; 102.12) est substantiellement complètement réalisée par l'isolation solide (2.8; 102.8) du premier composant actif à haute tension (2.1; 102.1)
et/ou
- l'isolation électrique externe du second dispositif d'interface électrique (2.13; 102.13) est substantiellement complètement réalisée par l'isolation solide (2.9; 102.9) du second composant actif à haute tension (2.2; 102.2).

8. Dispositif selon la revendication 6 ou 7, **caractérisé en ce que** le premier dispositif d'interface électrique (2.12; 102.12; 202.12) et le second dispositif d'interface électrique (2.13; 102.13; 202.13) sont configurés à la manière d'une connexion à fiche.

9. Dispositif selon une quelconque des revendications précédentes, **caractérisé en ce que** l'isolation électrique externe d'au moins deux composants actifs à haute tension (2.4, 2.5, 2.6; 102.4, 102.5, 102.6; 202.4, 202.5, 202.6) est substantiellement complètement réalisée par une isolation commune au moyen d'une isolation solide (2.11; 102.11) et/ou d'un moyen d'isolation liquide (202.11).

10. Dispositif selon la revendication 9, **caractérisé en ce que** les deux composants à haute tension (2.4, 2.5, 2.6; 102.4, 102.5, 102.6; 202.4, 202.5, 202.6) sont connectés l'un à l'autre par une connexion électrique, l'isolation électrique externe de la connexion électrique étant, en particulier, substantiellement complètement, réalisée par l'isolation solide commune (2.11; 102.11) des deux composants actifs à haute tension (2.4, 2.5, 2.6; 102.4, 102.5, 102.6; 202.4, 202.5, 202.6) et/ou le moyen d'isolation liquide (202.11).

11. Dispositif selon une quelconque des revendications précédentes, **caractérisé en ce qu'**un dispositif porteur (2.7; 102.7; 202.7), en particulier un contenant, est prévu pour la réception commune d'au moins une fraction des composants actifs à haute tension (2.1 à 2.6; 102.1 à 102.6; 202.1 à 202.6).

12. Dispositif selon une quelconque des revendications précédentes, **caractérisé en ce que** les composants actifs à haute tension (2.1 à 2.6; 102.1 à 102.6; 202.1 à 202.6) comprennent
- au moins un capteur pour détecter le système de tension et/ou
- au moins un élément de protection contre les surtensions dans le système à tension continue et/ou alternative et/ou
- au moins un élément de commutation de puissance pour un système à tension alternative et/ou
- au moins un élément de commutation de puissance pour un système à tension continue et/ou
- au moins un élément de protection contre les pics de tension transitoires et/ou
- au moins un élément de commutation pour des circuits à déconnecter et/ou à mettre la terre et/ou
- au moins un capteur pour mesurer le courant dans un système à tension continue et/ou alternative.

13. Dispositif selon une quelconque des revendications précédentes, **caractérisé en ce que**
- un boîtier (202.18 à 202.21) est prévu, dans lequel est disposé au moins le premier composant actif à haute tension (202.1 à 202.6),
- le moyen d'isolation liquide (202.8 à 202.11) est reçu dans le boîtier (202.18 à 202.21) de telle manière à ce qu'au moins le premier composant actif à haute tension (202.1 à 202.6) ait au moins partiellement le moyen d'isolation liquide (202.8 à 202.11) s'écoulant autour de lui.

14. Dispositif selon la revendication 13, **caractérisé en ce qu'**au moins le premier composant actif à haute tension (202.1 à 202.6) a le moyen d'isolation liquide (202.8 à 202.11) s'écoulant substantiellement complètement autour de celui-ci.

15. Dispositif selon une quelconque des revendications précédentes, **caractérisé en ce qu'**un moyen est utilisé comme moyen d'isolation liquide (202.8 à 202.11) lequel, dans des conditions de fonctionnement du véhicule (201), a une résistance de percement électrique qui correspond à au moins 10 fois la résistance de percement électrique de l'air.

16. Dispositif selon une quelconque des revendications précédentes, **caractérisé en ce qu'**une huile minérale, un liquide à base de silicone ou un liquide à base d'ester est utilisé comme moyen d'isolation liquide (202.8 à 202.11).

17. Véhicule, en particulier véhicule ferroviaire, avec au moins un appareil de prise de courant (3; 103; 203) et un dispositif (2; 102; 202) connecté électriquement à celui-ci selon une quelconque des revendications précédentes.

18. Véhicule selon la revendication 17, **caractérisé en ce que** plusieurs, en particulier tous les composants actifs à haute tension (2.1 à 2.6; 202.1 à 202.6) du véhicule (1; 201) alimenté par l'appareil de prise de courant (3; 203) sont disposés sur le toit du véhicule (1.1; 201.1), où ils sont maintenus, en particulier, par un dispositif porteur commun (2.7; 207).

19. Véhicule selon la revendication 18, **caractérisé en ce que** le dispositif porteur (2.7; 207) est configuré comme un contenant à toit, en particulier de forme aérodynamique.

20. Véhicule selon la revendication 17, **caractérisé en ce que** plusieurs, en particulier tous les composants actifs à haute tension (102.1 à 102.6) du véhicule (101) alimenté par l'appareil de prise de courant (103) sont disposés dans une région sous plancher (101.2), où ils sont maintenus, en particulier, par un dispositif porteur commun (102.7).

21. Véhicule selon une quelconque des revendications 18 à 20, **caractérisé en ce que** le dispositif porteur (2.7; 102.7; 202.7) avec les composants actifs à haute tension (2.1 à 2.6; 102.1 à 102.6; 202.1 à 202.6) reçus par celui-ci est configuré comme un ensemble de composants séparément assemblable, préfabriqué et, en particulier, précontrôlé.

22. Véhicule selon une quelconque des revendications 17 à 21, **caractérisé en ce que** l'appareil de prise de courant (103) est configuré avec un bras oscillant inférieur isolé (103.2) et, en particulier, a un couplage à haute tension intégré (103.3).
